# EUROPEAN PATENT APPLICATION

(11) **EP 2 230 532 A2**
(43) Date of publication of application: **22.09.2010**
(21) Application number: 10156672.7
(22) Date of filing: 16.03.2010
(51) Int. Cl.: G01S 5/02, G01S 13/87

(54) **Person location system**

(30) Priority: 16.03.2009 NL 2002629
(71) Applicant: Anthony B.V., 5656 AE Eindhoven (NL)
(72) Inventor: Aartsen, Herman, 5524 AN Steensel (NL); Niesten, Ron, 6137 KT Sittard (NL); Veeren, John, 5671 AS Nuenen (NL)
(74) Representative: Verhees, Godefridus Josephus Maria

(57) **Abstract**

A locating system is equipped with energy saving means which put mobile transmission devices 9 in an energy saving mode if the latter have not moved for a period of time and activate them again when they have. These energy saving means are formed, on the one hand, by RF signal receivers 17 which form part of the mobile devices 9 and, on the other hand, by RF signal transmitters 15 which form part of stationary devices 5.

The RF signal receivers 17 are coupled to a processing unit 19 which activates the mobile devices 9 if it notices a change in the signal strength of the received RF signals.

## Description

### Field of the invention

The invention relates to a locating system for persons or objects in buildings, comprising a signal transmission system with at least one mobile device, various stationary devices and a stationary exchange, the stationary devices being adapted for transmitting and/or receiving ultrasonic signals, and the mobile device being adapted for receiving an ultrasonic identification code and transmitting an RF identification code.

Ultrasonic sound waves have the feature of filling a physical space and hardly being able to come through walls. As a result, the receiving devices can clearly notice the difference between the presence or absence of a transmission device in a room. Locating the mobile device within the room is then effected on the basis of a received ultrasonic code that is transmitted by the stationary devices (ultrasonic signal).

### State of the art

A locating system of this type is known from US 7,352,652. The mobile device is this patent comprises an ultrasonic transmitter for tracking and position locating and a radio transmitter for transmitting an identification code. The power supply for this mobile device is provided by a battery.

### Summary of the invention

It is an object of the present invention to provide a locating system of the type defined in the opening paragraph with which in a simple and cost-effective manner the battery life of the mobile device is longer than that of the known system. To this end the locating system according to the invention is **characterised in that** the locating system further includes energy saving means which put the mobile device in an energy saving mode if the latter has not moved for a period of time and activate the latter again when it has, which energy saving means comprise an RF signal transmitter which periodically transmits an RF signal, and also includes an RF signal receiver and a processing unit coupled thereto which activates the mobile device if it notices a change in the strength of the received RF signal. Since there is no need for the mobile device to generate ultrasonic signals, the battery life of the battery involved will be extended considerably. Also because it only needs to transmit an RF signal the moment a different ultrasonic code is received. All of these are measures taken to extend the time during which the system can work on a battery.

It should be observed that energy saving means for a mobile device are known per so from DE 10 2005 031 107. However, a motion sensor incorporated in the mobile device takes care of the activation or deactivation of the energy saving mode.

The mobile device can be arranged as an ultrasonic signal transmitter, in which case the stationary device is then arranged as an ultrasonic receiver. The mobile device periodically transmits an RF identification code and together with the transmission of this identification code the mobile device transmits an ultrasonic signal. This ultrasonic signal is received by one of the stationary devices which relays it through a wire to the exchange. This exchange also receives the RF identification code transmitted by the mobile device. This stationary device, whose received ultrasonic code that is relayed to the exchange is received at the same points in time as the RF identification code received by the exchange, is the stationary device in the vicinity of which the mobile device is located. The exact location of the ultrasonic transmitter in a room is then not of the utmost importance.

An embodiment of the locating system according to the invention is **characterised in that** the RF signal transmitter is arranged such that it transmits a narrow band signal. As a result, even a slight relative movement between RF signal transmitter and RF signal receiver can be detected. In the case of a displacement of the RF signal transmitter and the RF signal receiver relative to each other there is a possibility of the occurrence of multipath fading. As a consequence even a slight displacement may entail a large change in the received RF signal, as a result of which even a slight relative displacement can be detected very well. Multipath fading is found to occur if the transmitted RF signal is reflected and subsequently various reflected wave fronts reach the RF signal receiver and then sometimes extinguish one another and sometimes amplify one another.

Preferably, the mobile device is equipped with the RF signal receiver and the RF signal transmitter has a stationary location.

A further embodiment of the locating system according to the invention is **characterised in that** the stationary devices couple ultrasonic signals to a unique ultrasonic locating code and the mobile device receives these ultrasonic signals and transmits the locating code together with the identification code as an RF signal. The exchange now receives only wireless signals from the mobile device, which signals contain both the location and the identity of the mobile device. In consequence, no wires are needed since the signal transmission is conducted in a wireless fashion.

### Brief description of the drawings.

The invention will be elucidated more fully below based on examples of embodiment of the locating system according to the invention while reference is made to the appended drawing figures, in which:
Fig. 1 shows a building provided with a first embodiment of the locating system according to the invention; and
Fig. 2 shows a building provided with a second embodiment of the locating system according to the invention.

### Detailed description of the drawings

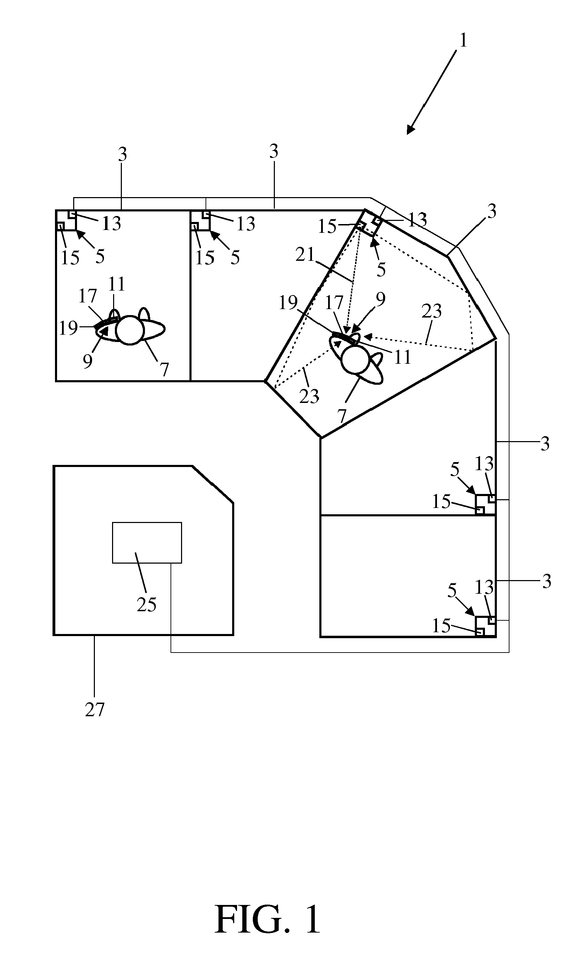

Fig. 1 gives a diagrammatic representation of a buidling 1 with is provided with a first embodiment of the locating system according to the invention.The building 1 has various rooms 3 with a stationary device 5 being present in each room. The persons to be located 7 each carry a mobile device 9.

For locating the persons 7 the mobile devices 9 are equipped with an ultrasonic transmitter 11 and the stationary devices 5 are equipped with ultrasonic receivers 13. The mobile device 9 periodically transmits an RF identification code and, simultaneously, an ultrasonic signal. This ultrasonic signal is received by one of the stationary devices 5 which relays this signal in wired fashion to an exchange 25. This exchange also receives the RF identification code transmitted by the mobile device. The stationary device whose received ultrasonic code that is relayed to the exchange is received at the same instant as the RF identification code received by the exchange, is the stationary device in the vicinity of which the mobile device is located.

The locating system is equipped with energy saving means which put a mobile device 9 in an energy saving mode if the latter has not moved for a period of time and activate it again when it has. These energy saving means are formed, on the one hand, by RF signal transmitters 15 which transmit a narrow band signal and form part of the stationary devices 5 and, on the other hand, by RF signal receivers 17 which form part of the mobile devices 9.

The RF signal receivers 17 are coupled to processing units 19 which are also carried by the persons 7. The processing unit 19 activates a mobile device 9 if it detects a change in the signal strength of the received RF signal from the RF signal receiver 17. Since the RF signal transmitter 15 transmits a narrow band signal, even a slight movement of the person 7 can be detected. When a person 7 moves and thus the RF receiver 17 moves with him or her, there is a possibility of multipath fading occurring. Multipath fading occurs if the transmitted RF signal is reflected and subsequently the direct RF signal 21 and various reflected wave fronts 23 reach the RF signal receiver 17 and then sometimes extinguish one another and sometimes amplify one another.

The RF signal transmitters may also form part of the mobile devices 9 and the RF signal receivers may form part of the stationary devices 5. In that case the RF signal receivers 17 may be coupled in wireless fashion to a central processing unit 25 which is accommodated in a control room 27. If the processing unit 27 notices a change in the signal strength of the received RF signal, it will send a signal to the mobile device 9 via the wireless connection so as to activate the mobile device 9.

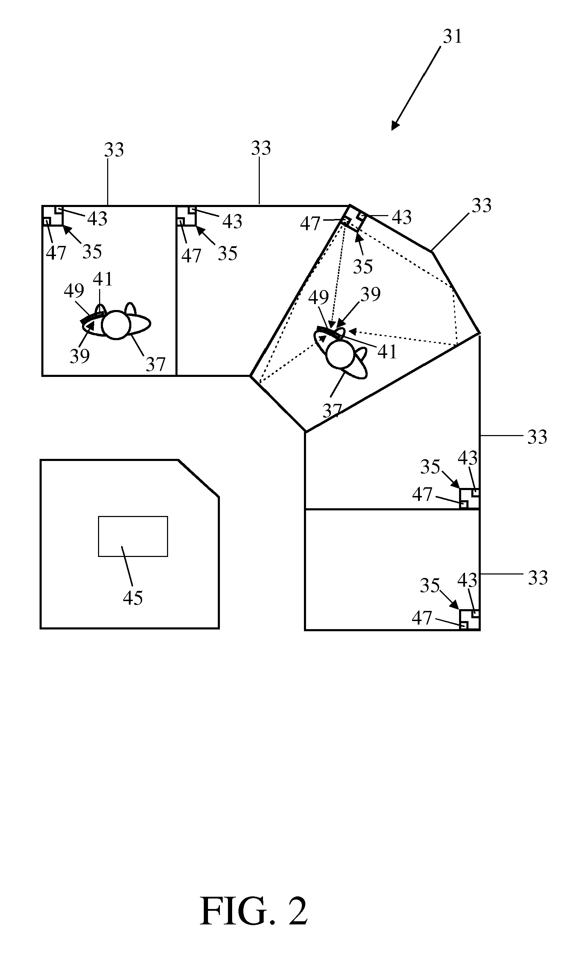

Fig. 2 gives a diagrammatic representation of a building 31 which is provided with a second embodiment of the locating system according to the invention. The building 31 also has various rooms 33 with a stationary device 35 being present in each room. The persons to be located 37 again each carry a mobile device 39.

For the locating operation of the persons 37 the mobile devices 39 are now equipped with an ultrasonic receiver 41 and the stationary devices 35 are equipped with ultrasonic transmitters 43 which now transmit, however, ultrasonic signals that have a unique locating code. The mobile device 39 now again periodically transmits an RF identification code.

The exchange 45 now only receives wiresless RF signals from the mobile device 39, which signals contain both the location and the identity of the mobile device. As a result, no wires are needed, but everything is conducted in wireless fashion.

This locating system too is equipped with energy saving means in the same way as described with reference to the first embodiment mentioned above, which energy saving means are formed by stationary RF signal transmitters 47 and mobile RF signal receivers 49.

Albeit the invention has been described in the foregoing with reference to the drawings, it should be observed that the invention is not by any manner or means restricted to the embodiment shown in the drawings. The invention also extends to all embodiments deviating from the embodiment shown in the drawings within the spirit and scope defined by the claims.

## Claims

1. A locating system for persons or objects in buildings, comprising a signal transmission system with at least one mobile device, various stationary devices and a stationary exchange, the stationary devices being adapted for transmitting and/or receiving ultrasonic signals, and the mobile device being adapted for receiving an ultrasonic identification code and transmitting an RF identification code, **characterised in that** the locating system further includes energy saving means which put the mobile device in an energy saving mode if the latter has not moved for a period of time and activate the latter again when it has, which energy saving means comprise an RF signal transmitter which periodically transmits an RF signal, and also includes an RF signal receiver and a processing unit coupled thereto which activates the mobile device if it notices a change in the strength of the received RF signal.

2. A locating system as claimed in claim 1, **characterised in that** the RF signal transmitter is arranged such that it transmits a narrow band signal.

3. A locating system as claimed in claim 1 or 2, **characterised in that** the mobile device is equipped with the RF signal receiver and the RF signal transmitter has a stationary location.

4. A locating system as claimed in claim 1, 2 or 3, **characterised in that** the stationary devices couple ultrasonic signals to a unique ultrasonic locating code and the mobile device receives these ultrasonic signals and transmits the locating code together with the identification code as an RF signal.
